# EUROPÄISCHE PATENTSCHRIFT

(11) **EP 3 195 767 B1**
(45) Veröffentlichungstag und Bekanntmachung des Hinweises auf die Patenterteilung: **04.03.2020**
(21) Anmeldenummer: 17151711.3
(22) Anmeldetag: 17.01.2017
(51) Int. Cl.: A47J 31/44

(54) **GETRÄNKEBEREITER MIT TASSENTISCH**
BEVERAGE PREPARER WITH CUP TABLE
AUTOMATE DE PRÉPARATION DE BOISSONS COMPRENANT UNE GRILLE POUR LES TASSES

(30) Priorität: 21.01.2016 DE 102016200844
(43) Veröffentlichungstag der Anmeldung: 26.07.2017
(73) Patentinhaber: WMF Group GmbH, 73312 Geislingen/Steige (DE)
(72) Erfinder: ALTHAUS, Peter, 3303 Jegenstorf (CH); EICKE, Joel, 89075 Ulm (DE); STÄB, Rolf, 89191 Nellingen (DE)
(74) Vertreter: Pfenning, Meinig & Partner mbB

(56) Entgegenhaltungen:
- EP-B1- 2 833 768
- WO-A1-2011/086087
- WO-A1-2012/007313
- CN-Y- 2 737 277

## Beschreibung

Die vorliegende Erfindung bezieht sich auf einen Getränkebereiter (insbesondere: elektrisch betriebene Kaffeemaschine wie z.B. Kaffeevollautomat) zum Zubereiten eines Getränkes (insbesondere: Kaffeespezialität). Erfindungswesentlich ist dabei der nachfolgend im Detail beschriebene Tassentisch, der nachfolgend alternativ auch als zweite (obere) Abstellfläche bezeichnet wird. Siehe hierzu den kennzeichnenden Teil aus Anspruch 1.

Aus dem Stand der Technik sind Getränkebereiter mit verschiedenen Arten von Tassentischen bzw. Abstellflächen bekannt: Einerseits Getränkebereiter, bei denen die Abstellflächen höhenverstellbar sind (relativ zum Gehäuse des Getränkebereiters), wobei der Getränkeauslauf des Getränkebereiteres ortsfest angeordnet ist. Siehe dazu die DE 10 2011 003 070 B4, die DE 29 44 264 A1, die WO 2012/110287 A1, die DE 29 22 022 A1 und die DE 20 2013 003 918 U1. Ebenso sind Getränkebereiter bekannt, bei denen der Tassentisch relativ zum Gehäuse ortsfest bleibt, jedoch der Getränkebereiterauslauf höhenverstellbar ist. Siehe z.B. die DE 10 2011 081 732 A1 und die WO 2004/023949 A1. Darüber hinaus gibt es einen oberen Tassentisch, der horizontal verschwenkbar ist (US 8,205,647 B2). Schließlich ist noch ein Tassentisch bekannt, der außerhalb des Gehäuses des Getränkebereiters zwei relativ zueinander verdreh- oder verschwenkbare Abstellflächenabschnitte aufweist (siehe die DE 10 2014 204 611 B3).

Warum benötigt man nun obere und untere Abstellflächen für verschiedene Gefäße (Tassen, Gläser etc.) bei Getränkebereitern wie Kaffeemaschinen: In der Gastronomie werden für verschiedene Ausgabeprodukte insbesondere von Kaffeemaschinen unterschiedliche Tassen oder auch Gläser verwendet, z.B. Tassen für Espresso, Kaffee Creme, Cappuccino, Milchkaffee oder Latte Macchiato unterscheiden sich stark in Größe und Form. Wäre nun der Abstand zwischen dem Getränkeauslauf des Getränkebereiters einerseits und der Abstellfläche für das Gefäß andererseits nicht veränderbar, so müsste dieser Abstand so groß gewählt werden, dass das höchste zu befüllende Gefäß noch unter den Auslauf passt. Für kleinere Gefäße würde dies aber bedeuten, dass das Getränk (Kaffee) aus großer Höhe in die Tasse fließt, was unweigerlich zum Verspritzen des Getränkebereiters und des Umfeldes führen würde (sowie, je nach Getränk, ggfs. auch zur Zerstörung einer gewünschten Crema des Getränkes). Ähnlich verhält es sich auch bei der Ausgabe von Milchschaum.

Ist der Getränkeauslauf höhenverstellbar, so hat dies aber den Nachteil, dass die medienführenden Schläuche (beispielsweise für Milch, Milchschaum, Wasser, Dampf, Kaffee, Milchmixgetränke usw.) mit bewegt werden müssen. Dies ist bei der Handhabung und bei der Reinigung hinderlich und ist mit einem relativ hohen konstruktiven Aufwand verbunden, damit die Schläuche beim Bewegen des Getränkeauslaufes nicht knicken und damit diese Schläuche auch vollständig leerlaufen, nachdem ein Getränk aus dem Getränkebereiter bezogen worden ist (verbleibende Getränkereste in den Leitungen würden sonst mit dem nächsten Getränk ausgegeben und dessen Qualität beeinträchtigen). Zudem wirken sich längere Getränkeausgabeschläuche negativ auf die Getränketemperatur und die Getränkequalität aus (Crema und Milchschaum).

Die CN 2 737 277 Y offenbart einen beweglichen Becherhalterahmen, der einen kleinen Becher in einer Höhe an einem Getränkebereiter positionieren kann, die ein Herausspritzen von Flüssigkeit aus dem kleinen Becher verhindert. Die EP 2 833 768 B1 offenbart einen Getränkebereiter, der dazu konfiguriert ist, Getränke in Gefäßen unterschiedlicher Größe bereitzustellen. Die WO 2011/086087 A1 offenbart einen Getränkebereiter, der nah am Getränkeauslauf des Getränkebereiters eine Trageplatte für Gefäße aufweist, die in Richtung des Gehäuses des Getränkebereiters beweglich ist.

Aufgabe der vorliegenden Erfindung ist somit, einen Getränkebereiter zur Verfügung zu stellen, bei dem der Abstand zwischen dem Getränkebereiterauslauf (nachfolgend abgekürzt: Auslauf) und der/den Abstellfläche(n) an die jeweils zu verwendende Gefäßhöhe anpassbar ist, wobei der Getränkebereiterauslauf relativ zum Maschinengehäuse ortsfest bleiben soll. Aufgabe ist darüber hinaus, einen Getränkebereiter zur Verfügung zu stellen, bei dem der Mechanismus, der die vorgenannte Aufgabe löst, einfach und schnell bedienbar ist, im rauen Alltagsbetrieb robust und stabil ist, und geräuscharm arbeitet und gut gereinigt werden kann. Der Mechanismus soll dabei für gängige Gefäßhöhen (Tassengrößen) gute Einfüllhöhen bieten.

Diese Aufgabe wird durch einen Getränkebereiter gemäß Anspruch 1 gelöst. Vorteilhafte Ausführungsvarianten lassen sich dabei den abhängigen Ansprüchen entnehmen.

Grundidee der Erfindung aus der Praxis heraus ist es, zwei unterschiedliche Abstände zwischen Auslauf und Gefäßabstellfläche als ausreichend anzusehen. Selbstverständlich kann aber, sofern gewünscht, zusätzlich zur oberen und zur unteren Abstellfläche, vgl. Anspruch 1, auch mindestens eine weitere, mittlere Abstellfläche, die in Vertikalrichtung gesehen zwischen der oberen und der unteren Abstellfläche angeordnet ist, vorgesehen sein. Sind mehrere Getränkeausläufe vorhanden, so können auch mehrere unterschiedliche Abstellflächen (z.B. eine obere Abstellfläche und eine Abstellfläche auf mittlerer Höhe) seitlich nebeneinander und jeweils oberhalb einer entsprechend verbreiterten unteren Abstellfläche (die unterhalb der beiden, allgemein der mehreren, seitlich nebeneinander angeordneten Getränkeausläufe positioniert ist) angeordnet sein. Die obere und die mittelhohe Abstellfläche können dann beide, wie es für die obere Abstellfläche im Anspruch 1 beschrieben ist, jeweils von einer Verstauposition im Gehäuse in eine horizontale Abstellposition verschwenkbar sein und umgekehrt. Nachfolgend wird die Erfindung jedoch am Beispiel von genau zwei Abstellflächen (obere und untere Abstellfläche) im Detail beschrieben.

Gemäß Anspruch 1 wird unter "Verschwenken" verstanden, die obere Abstellfläche entlang einer Trajektorie zu bewegen (z.B. über die Stützfläche zu ziehen, vgl. auch die abhängigen Ansprüche). Diese Trajektorie wird nachfolgend alternativ auch als Schwenktrajektorie bezeichnet. Dabei verläuft diese (Schwenk)Trajektorie nicht ausschließlich entlang einer geraden Linie im Raum (also geometrisch gesprochen: nicht ausschließlich entlang einer Strecke), sondern die Trajektorie enthält zumindest einen, ggfs. mehrere gekrümmt verlaufende Abschnitte.

Insbesondere kann "Verschwenken" beinhalten, dass die obere Abstellfläche entlang der Schwenktrajektorie zumindest abschnittsweise verdreht (rotiert) wird, also entlang eines Umfangsabschnitts eines Kreises bewegt wird. Ebenso kann ein Abschnitt der Schwenktrajektorie ein Ellipsenabschnitt sein. Andere, nahezu beliebig gekrümmt verlaufende Trajektorienabschnitte bzw. gekrümmte Trajektorienverläufe sind möglich (z.B. auch Trajektorien, die sowohl Kreisumfangsabschnitte, als auch Ellipsenabschnitte und ggfs. zudem kurze gerade Abschnitte aufweisen).

"Und umgekehrt" gemäß Anspruch 1 bedeutet, dass die obere Abstellfläche wieder von der Abstellposition in die Verstauposition im Gehäuse zurückverschwenkt werden kann, dass also die Bewegung entlang der besagten Trajektorie reversibel ist.

Eine erfindungsgemäße Kaffeemaschine kann insbesondere ein Kaffeevollautomat sein, innerhalb dessen Gehäuses sich insbesondere ein Heißwasserbereiter, eine Kaffeemühle (mit Mahlwerk), eine Brühgruppe mit ihrer Brühkammer, ein Kaffeesatzbehälter (nachfolgend: Satzbehälter) und/oder ein Bevorratungsbehälter (oder auch mehrere Bevorratungsbehälter) für Kaffeebohnen oder auch für Kaffeemehl befinden können. Anordnung und Aufbau der vorgenannten Bauelemente sind dem Fachmann dabei bekannt. Satzbehälter und Bevorratungsbehälter kann/können dabei als ins Gehäuse einschiebbare oder einsetzbare Behälter oder auch als ins Gehäuse fest eingebaute, über einen Klappe, Tür oder dergleichen (in einer Gehäuseseitenwand oder in der Gehäuseoberseite) zugängliche Behälter ausgebildet sein.

Die Lageangaben "oben" und "unten" bei den beiden Abstellflächen sind auf die Positionierung der Abstellflächen relativ zum bzw. am Gehäuse bezogen. In der Vertikalen gesehen ist somit in der Regel der Getränkeauslauf am Gehäuse des Getränkebereiters oberhalb der oberen Abstellfläche (wenn diese in ihrer Abstellposition ist) positioniert und die obere Abstellfläche (in besagter Abstellposition) ist in der Regel oberhalb der unteren Abstellfläche positioniert. Dabei wird in der Regel durch ein Verbringen der oberen Abstellfläche in die Verstauposition der zum Aufstellen des ersten (höheren) getränkeaufnehmenden externen Behältnisses auf die untere Abstellfläche, also der zum Positionieren des höheren Gefäßes zwischen dem Getränkeauslauf einerseits und der unteren Abstellfläche andererseits notwendige Raum geschaffen.

Im Rahmen der Erfindung wird nachfolgend die obere Abstellfläche alternativ auch als Tassentisch bezeichnet, die untere Abstellfläche wird auch als Tropfgittereinlage der Tropfschale des Getränkebereiters bezeichnet (bzw. letzteres wird als Beispiel für eine untere Abstellfläche genommen, obwohl diese auch anders ausgebildet sein kann).

Dass die obere Abstellfläche in ihrer Verstauposition im Gehäuse des Getränkebereiters verstaut (nachfolgend alternativ auch "versenkt") ist, muss dabei nicht heißen, dass in dieser Verstauposition gar keine Einzelteile bzw. Abschnitte der oberen Abstellfläche mehr von außerhalb des Gehäuses sichtbar sein und/oder über das Gehäuse des Getränkebereiters auskragen dürfen (vgl. Ausführungsbeispiel später: Der Griff der oberen Abstellfläche ist noch von außerhalb des Gehäuses in der Verstauposition sichtbar), sondern dies heißt nur, dass der überwiegende Teil der oberen Abstellfläche in der Verstauposition innerhalb des Gehäuses des Getränkebereiters positioniert ist (also z.B. im Gehäuse versenkt wird). In der Verstauposition sind daher in der Regel keine Behältnisse bzw. Gefäße auf der oberen Abstellfläche abstellbar, da sich zumindest der überwiegende Teil der oberen Abstellfläche innerhalb des Gehäuses befindet.

Jedoch dient die obere Abstellfläche natürlich dazu, Behältnisse geringerer Höhe in ihrer Abstellposition auf ihrer Oberseite aufzustellen: In dieser Abstellposition ist die obere Abstellfläche horizontal ausgerichtet und liegt (stabil) bevorzugt auch außerhalb des Gehäuses. Letzteres bedeutet, dass die obere Abstellfläche in der Abstellposition zumindest abschnittsweise, bevorzugt überwiegend oder auch ganz außerhalb des Gehäuses angeordnet ist. So kann beispielsweise in der Abstellposition die obere Abstellfläche aus einer Wand des Gehäuses (insbesondere: der frontseitigen Gehäusewand) des Getränkebereiters horizontal auskragen.

Die in den abhängigen Ansprüchen beschriebenen vorteilhaften Ausführungsformen können dabei - sofern dies durch die Struktur der abhängigen Ansprüche nicht unzulässig ist - auf nahezu beliebige Art und Weise miteinander kombiniert werden: So können mehrere der in den abhängigen Ansprüchen beschriebenen Ausführungsformen kumulativ an ein und demselben Getränkebereiter verwirklicht sein, es können jedoch auch nur einzelne der beschriebenen Ausführungsformen realisiert werden bzw. einzelne der beschriebenen Merkmale können auch weggelassen werden.

Die Winkelintervalle aus Anspruch 2 verstehen sich inklusive der Grenzwerte. Die Horizontale ist eine Ebene senkrecht zur Lotrichtung, also zur Erdanziehungsrichtung. Bevorzugt steht die obere Abstellfläche in ihrer Verstauposition so wie in diesem Anspruch beschrieben, weil dies ein platzsparendes Unterbringen derselben innerhalb des Gehäuses des Getränkebereiteres (insbesondere: in einem einschiebbaren Kaffeesatzbehälter des Gehäuses) erlaubt. α ist dabei in der Verstauposition der Winkel zwischen derjenigen Oberfläche der oberen Abstellfläche, die zum Aufstellen der externen Behältnisse geringerer Höhe (in der Abstellposition) ausgeformt ist, und der Horizontalen.

Weitere vorteilhafterweise realisierbare Merkmale lassen sich Anspruch 3 entnehmen.

Der Satzbehälter als Teil des Gehäuses kann dabei aus den bzw. in die den Satzbehälter umhüllenden restlichen Teile(n) des Gehäuses herausziehbar bzw. herausschwenkbar und wieder einschiebbar bzw. hereinschwenkbar sein. Dies dient dem Leeren des nach mehreren zubereiteten Kaffeegetränken im Satzbehälter insgesamt angehäuften Kaffeesatzes.

Insbesondere kann der (eingeschobene) Kaffeesatzbehälter als Teil des Gehäuses einen Abschnitt der Gehäusefront der Kaffeemaschine ausbilden und in seiner dieser Gehäusefront zugewandten Vorderseite einen Verstauraum (Verstautasche) aufweisen, innerhalb dessen/deren die obere Abstellfläche bevorzugt vollständig versenkbar ist (bis auf einen Griff der oberen Abstellfläche, der zum Wiederherausschwenken der oberen Abstellfläche verwendet werden kann, siehe auch nachfolgendes Ausführungsbeispiel).

Weitere vorteilhafterweise realisierbare Merkmale lassen sich Anspruch 4 entnehmen.

Diese Merkmale bedeuten, dass beim Bewegen der oberen Abstellfläche entlang der Schwenktrajektorie zumindest Abschnitte der oberen Abstellfläche einerseits und der Stützfläche andererseits mechanisch in Kontakt sind (Gleitreibung). Dabei müssen nicht alle Abschnitte der Stützfläche genutzt werden, um die obere Abstellfläche aus der Abstellposition in die Verstauposition (oder umgekehrt) zu verbringen. Beinhaltet ist also auch der Fall, dass die obere Abstellfläche lediglich über Abschnitte der Stützfläche gezogen bzw. verschoben wird, wenn die obere Abstellfläche aus der Abstellposition in die Verstauposition (oder umgekehrt) gebracht wird.

Besagtes Bewegen (insbesondere: Ziehen oder Schieben) kann durch einen Benutzer des Getränkebereiters manuell erfolgen. Grundsätzlich ist es aber auch denkbar, die obere Abstellfläche und das Gehäuse (insbesondere: den Kaffeesatzbehälter desselben) so auszubilden, dass die obere Abstellfläche mittels eines Elektromotors und eines an diesen angeflanschten Getriebes zwischen der Abstellposition und der Verstauposition (und umgekehrt) hin- und herbewegt werden kann.

Die Stützfläche kann ein Bauteil des Gehäuses sein bzw. einen Gehäuseabschnitt des Getränkebereiters ausbilden.

Weitere vorteilhafterweise realisierbare Merkmale beschreibt Anspruch 5.

Die Stützfläche kann also eine Auflagefläche aufweisen, die die obere Abstellfläche in ihrer Abstellposition in einer horizontalen Lage durch mechanischen Kontakt abstützt. Bevorzugt ist sowohl die Auflagefläche als auch der Verschwenkabschnitt vorhanden.

Eine Ausbildung gemäß dieses Anspruchs ist bei Auswahl geeigneter Materialien (sowie Ausformung der genannten Bauelemente, vgl. nachfolgendes Ausführungsbeispiel) für die obere Abstellfläche und die Stützfläche, die Auflagefläche und/oder den Verschwenkabschnitt geräuscharm, da die obere Abstellfläche einfach über die Stützfläche bzw. Abschnitte derselben gezogen und geschoben werden kann, ohne dass hierzu Gelenke, Lager oder ähnliches (die beispielsweise zu Klappergeräuschen führen könnten) notwendig sind. Geeignete Materialien für die besagten Bauteile sind wie folgt: Die Auflagefläche der Stützfläche kann aus Metall wie z.B. Edelstahl (z.B. V2A) und die Gleitfläche (also der Verschwenkabschnitt der Stützfläche) am Gehäuse kann aus einem Kunststoff wie z.B. POM, ABS, PP oder PTFE ausgebildet werden. Alternativ ist auch eine umgekehrte Materialverwendung denkbar, d.h. die Auflagefläche kann aus Kunststoff (z.B. einem der vorgenannten) und die Gleitfläche kann aus Metall, z.B. Edelstahl (z.B. V2A), ausgebildet werden.

Weitere vorteilhafte Ausführungsvarianten lassen sich den Ansprüchen 6 und 7 entnehmen.

Gemäß dieser Ansprüche kann die Raste für die obere Abstellfläche (insbesondere für das - in der Abstellposition gesehen - dem Gehäuse zugewandte Ende der oberen Abstellfläche) einen mechanischen Anschlag ausbilden. Das Einrasten kann formschlüssig und/oder kraftschlüssig geschehen. Durch ein Wiederausrasten kann die obere Abstellfläche wieder von der Abstellposition in die Verstauposition zurückverschwenkt werden.

Dabei können das Gehäuse (insbesondere: der Satzbehälter desselben) und die obere Abstellfläche so ausgeformt und ausgebildet sein, dass kurz nach dem Ausrasten der oberen Abstellfläche aus der Raste (also wenn beim Verschieben der oberen Abstellfläche aus der Abstellposition entlang der Schwenktrajektorie lediglich ein kurzes Wegstück in Richtung zur Verstauposition hin zurückgelegt ist) die obere Abstellfläche selbstständig, also ohne weitere(n) aktive Führung bzw. Kraftaufwand durch den Benutzer des Getränkebereiters und rein durch die Schwerkraft, über die Stützfläche (insbesondere vermittels des Verschwenkabschnitts bzw. der beiden Stützleisten) entlang der Schwenktrajektorie wieder in die Verstauposition innerhalb des Gehäuses zurückfällt. "Kurz" bedeutet dabei, dass dies bereits nach einem im Vergleich zur Gesamtlänge der Schwenktrajektorie sehr kleinen Wegabschnitt entlang letzterer in Richtung zur Verstauposition hin geschieht.

Weitere vorteilhafterweise realisierbare Merkmale lassen sich Anspruch 8 entnehmen.

Dabei kann der Griff ein Handgriff sein. Er kann insbesondere in Form einer Eingriffsmulde für die Fingerspitzen des Benutzers des Getränkebereiters ausgeformt sein.

Weitere vorteilhafterweise realisierbare Merkmale lassen sich Anspruch 9 und Anspruch 10 entnehmen.

Gemäß Anspruch 10 kann also in der Verstauposition von der oberen Abstellfläche ausschließlich der Griff (insbesondere also nicht das Tropfgitter) von außerhalb des Gehäuses sichtbar und/oder für den Benutzer zugänglich sein. Generell gesagt kann also in der Verstauposition von allen Bauelementen der oberen Abstellfläche das einzig sichtbare bzw. für den Benutzer greifbare oder zugängliche Bauelement der Griff sein, wohingegen in der Verstauposition alle anderen Bauelemente der oberen Abstellfläche nicht zugänglich bzw. sichtbar sind.

Dabei kann in der Verstauposition der Griff (von außerhalb des Gehäuses gesehen) einen formschlüssig in die Außenwandung (insbesondere: in die Frontblende) des Gehäuses integrierten Gehäuseabschnitt ausformen.

Weitere vorteilhafterweise realisierbare Merkmale lassen sich dem Anspruch 11 entnehmen.

Die Ausbildung bzw. Ausformung gemäß Anspruch 11 kann so sein, dass das besagte Entnehmen durch ein manuelles Bewegen der oberen Abstellfläche entlang einer zumindest abschnittsweise steiler als die von der Verstauposition zur Abstellposition führende Schwenktrajektorie verlaufenden Entnahmetrajektorie geschieht. (Wird nachfolgend der Begriff der "Trajektorie" verwendet, so ist immer die "Schwenktrajektorie" gemeint, sofern die Trajektorie nicht explizit nicht als "Entnahmetrajektorie" gekennzeichnet ist.)

In der Regel nutzt der die obere Abstellfläche aus dem Gehäuse des Getränkebereiters entnehmende bzw. herausziehende Benutzer dabei die Stützfläche (bevorzugt: deren Verschwenkabschnitt), verzichtet aber nicht zuletzt aufgrund der steiler verlaufenden Entnahmetrajektorie beim Entnehmen der oberen Abstellfläche auf das vorangehend beschriebene Einrasten der oberen Abstellfläche in die Raste.

Vorzugsweise ist besagte Ausbildung bzw. Ausformung so, dass vor der vollständigen Entnahme keinerlei Befestigungselemente (Schrauben oder dergleichen) gelöst werden müssen: Vorzugsweise existieren keine Befestigungselemente, mit denen die obere Abstellfläche am Gehäuse (bzw. am Satzbehälter desselben) befestigt ist.

Erfindungsgemäß können somit (mittels der unteren und der oberen Abstellfläche) zwei Höhenpositionen für unterschiedlich hohe externe Behältnisse bzw. Gefäße realisiert werden: Große Behältnisse können direkt auf der Tropfgittereinlage der Tropfschale (untere Abstellfläche) abgestellt werden. Für kleinere Behältnisse kann die obere Abstellfläche z.B. in Form eines weiteren Gitters in einer erhöhten Position platziert werden. Erfindungsgemäß wird die obere Abstellfläche bzw. dieses weitere Gitter auch Tassentisch genannt.

Wird der Tassentisch nicht benötigt (oder soll ein großes Behältnis auf der unteren Abstellfläche abgestellt werden), so kann er komplett im Gehäuse des Getränkebereiters versenkt werden und stört dann nicht bei der Bedienung des Getränkebereiters. Falls der Satzbehälter einen Teil des Gehäuses (z.B. der Maschinenfront des Getränkebereiters) bildet, kann der Tassentisch auch im Satzbehälter in seiner Verstauposition versenkt werden.

Durch Eingreifen in die Griffmulde eines Griffs und Herausziehen kann der Tassentisch aus der versenkten Position (Verstauposition) in die Abstellposition (nachfolgend auch als Arbeitsposition bezeichnet) gebracht werden. Dies kann in einer intuitiven Schwenkbewegung, bei der der Tassentisch über die Stützfläche gezogen wird, geschehen. Beim Herausziehen aus dem Gehäuseinneren kann also die obere Abstellfläche aus einer (nahezu) senkrechten Stellung innerhalb des Gehäuses in eine waagrechte bzw. horizontale, herausgezogene Stellung verschwenkt werden. Am Ende des Bewegungswegs, also der Schwenktrajektorie, kann sich ein Anschlag (Raste) befinden. Wenn die obere Abstellfläche an diesem Ende der Trajektorie auf der Stützfläche abgelegt wird, rastet sie in der Raste ein, so dass die obere Abstellfläche horizontal nicht mehr verschoben werden kann. In der vertikalen Richtung wird die obere Abstellfläche durch die Stützfläche mechanisch so abgestützt bzw. unterstützt, dass sie nicht mehr weiter abkippen kann. In dieser Stellung (Abstellposition) kann die obere Abstellfläche zum Abstellen kleinerer Gefäße bzw. Tassen benützt werden.

Durch ein leichte Anheben der Abstellfläche bzw. des Tassentisches wird diese(r) aus der Raste gelöst und kann in das Gehäuse des Getränkebereiters eingeschoben werden. Bereits nach einem kurzen Weg liegt der Schwerpunkt des Tassentisches hinter dem Auflagepunkt. Von da an wird der Tassentisch selbsttätig (d.h. alleine durch die Schwerkraft) in die Endposition innerhalb des Gehäuses, also die Verstauposition, gezogen.

Zum Reinigen kann der Tassentisch vollständig aus dem Gehäuse (insbesondere: dem Satzbehälter desselben) entnommen werden. Hierzu wird er entlang der Entnahmetrajektorie, also unter einem steileren Winkel als beim Ziehen entlang der Schwenktrajektorie, nach oben gezogen. So fährt der Tassentisch am Endabschlag (Raste) für die Arbeitsposition bzw. Abstellposition vorbei und kann entnommen werden. Zum erneuten Einsetzen ins Gehäuse bzw. in den Satzbehälter wird der Tassentisch wiederum unter einem steileren Winkel als bei der Schwenktrajektorie eingeschoben.

Derjenige Bereich, in den der Tassentisch entlang der Entnahmetrajektorie oder der Schwenktrajektorie zur Verstauposition hin eingeschoben wird, kann für Reinigungszwecke von unten über eine große Öffnung zugänglich sein.

Des weiteren kann, falls dies erforderlich ist, eine vordere Abdeckung (also ein Abschnitt der Frontblende des Gehäuses) des Satzbehälters vom Satzbehälter weg geclipst werden.

Der Tassentisch kann aus einem Tropfgitter und einem Handgriff bestehen, wobei diese beiden Elemente durch eine Schnappverbindung miteinander verbunden und voneinander wieder gelöst werden können. Letzteres ist für Reinigungszwecke vorteilhaft.

Die vorliegende Erfindung weist gegenüber dem Stand der Technik insbesondere die Vorteile auf, dass sie sämtliche in der Aufgabenstellung angegebenen Aufgaben löst. Insbesondere ist keine Höhenverstellung des Auslaufs des Getränkebereiters (mit den beim Stand der Technik beschriebenen Nachteilen) notwendig. Während des Betriebs ist eine schnelle und einfache Bedienung des Getränkebereiters (Wegschwenken und Verstauen bzw. Ausziehen des Tassentisches) möglich. Die obere Abstellfläche bzw. der Tassentisch bietet eine stabile und ebene Abstellfläche für kleinere Behältnisse. Der Tassentisch hat einen einfachen und mechanisch robusten Aufbau. Er ist beim Ein- und Ausziehen geräuscharm und seine Bauelemente können gut gereinigt werden. Falls er nicht benutzt wird, ist er platzsparend im Gehäuse bzw. im Satzbehälter desselben integriert.

Nachfolgend wird die Erfindung anhand eines Ausführungsbeispiels beschrieben. Dabei zeigen:
Figur 1 eine Aufsicht auf einen erfindungsgemäßen Getränkebereiter, der als elektrisch betriebener Kaffeevollautomat ausgebildet ist und wobei sich die obere Abstellfläche in ihrer Abstellposition befindet.
Figur 2 eine entsprechende Aufsicht, jedoch in der Verstauposition der oberen Abstellfläche.
Figur 3 den Kaffeesatzbehälter des erfindungsgemäßen Kaffeeautomaten aus Figur 1, in dem erfindungsgemäß die obere Abstellfläche in ihrer Verstauposition versenkt ist.
Figur 4 den Satzbehälter aus Figur 3, wobei jedoch die obere Abstellfläche in ihrer Abstellposition ist.
Figur 5 wie die obere Abstellfläche beim Satzbehälter aus den Figuren 3 und 4 aus der Abstellposition in die Verstauposition verbracht werden kann.
Figur 6 Details des Satzbehälters aus den Figuren 1 bis 5 bei entfernter oberer Abstellfläche.
Figur 7 Details der oberen Abstellfläche.

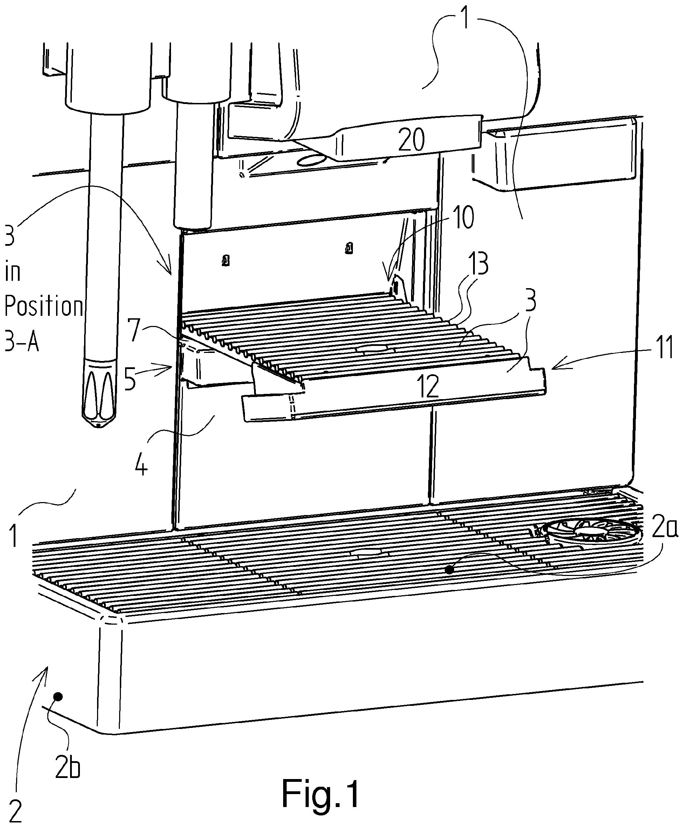

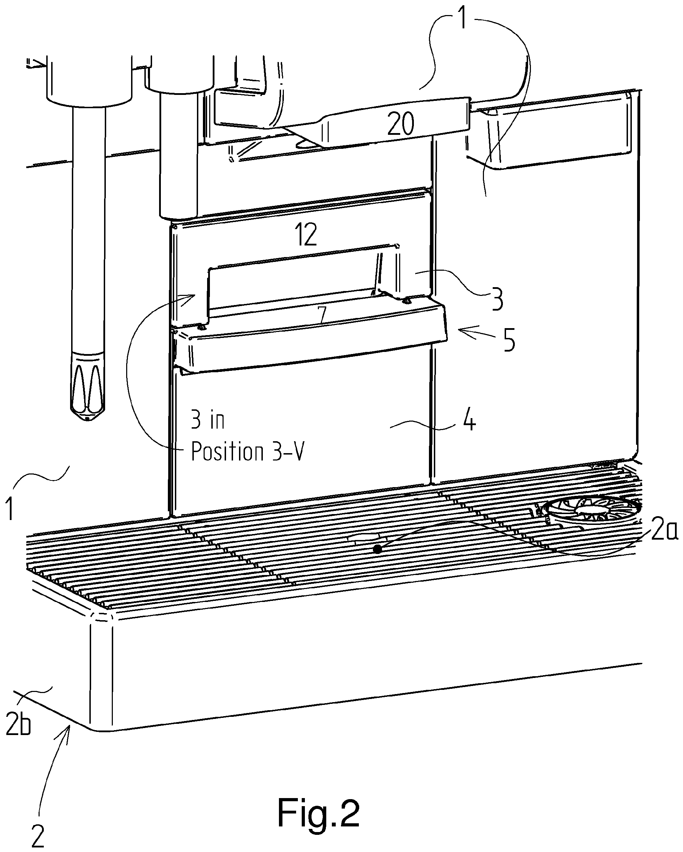

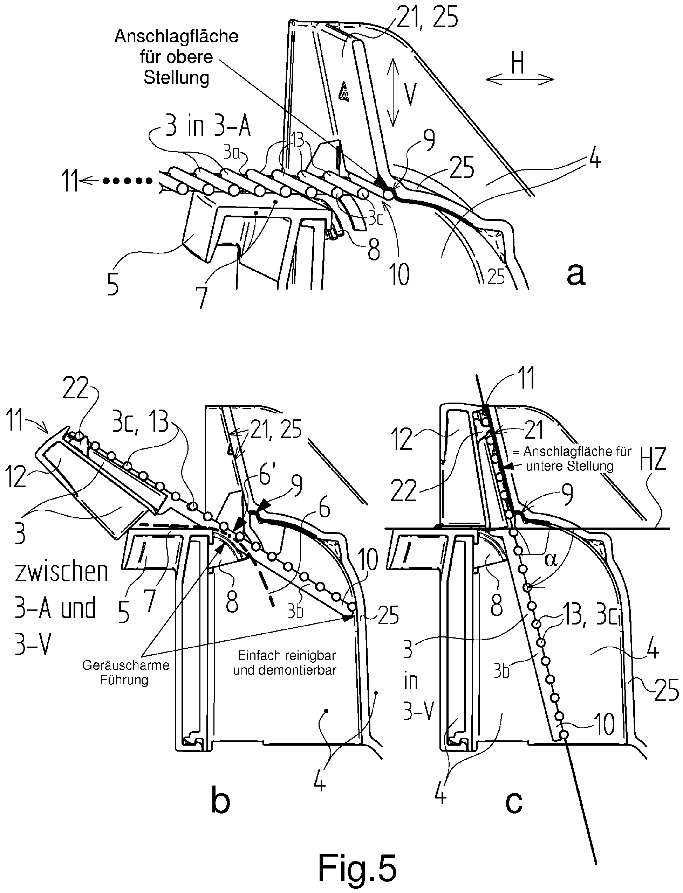

Figur 1 zeigt einen erfindungsgemäßen Vollautomaten, wobei dessen Gehäuse bzw. Gehäusefront mit dem Bezugszeichen 1 bezeichnet ist. Figur 1 zeigt die obere Abstellfläche 3 in der herausgezogenen, also herausgeschwenkten Abstellposition 3-A, in der die obere Abstellfläche 3 bzw. deren Oberseite (die zum Aufstellen kleinerer Gefäße ausgebildet ist) horizontal liegt. Figur 2 zeigt die Vorderfront des Gehäuses 1 in einem Zustand, in dem die obere Abstellfläche 3 aus der in Figur 1 gezeigten Abstellposition 3-A entlang der Schwenktrajektorie 6 (vgl. Figur 5b) in die Verstauposition 3-V innerhalb des Gehäuses 1 bzw. innerhalb des Satzbehälters 4 desselben zurückgeschwenkt wurde.

In der Vertikalen V (vgl. Figur 5a) gesehen sind in Figur 1 übereinander die untere Abstellfläche 2, die obere Abstellfläche 3 in ihrer horizontalen Abstellposition 3-A und der Getränkeauslauf 20 der gezeigten Kaffeemaschine angeordnet bzw. sichtbar. Die untere Abstellfläche 2 umfasst hier die Tropfschale 2b und die horizontal an deren Oberseite in dieselbe eingelegte Tropfgittereinlage 2a.

4 bezeichnet den Satzbehälter des Gehäuses 1 der Kaffeemaschine, von dem in den Figuren 1 und 2 lediglich die zum Benutzer der Maschine hin gerichtete Vorderfront sichtbar ist.

In ihrer Abstellposition 3-A (siehe Figur 1) ist die obere Abstellfläche 3 bzw. deren Oberseite horizontal ausgerichtet, so dass auf ihr unterhalb des Auslaufs 20 ein Gefäß (nicht sichtbar) geringerer Höhe zum Befüllen mit Kaffee aus dem Auslauf 20 aufgestellt werden kann. Entlang der Vertikalen V gesehen liegt die obere Abstellfläche 3 in ihrer horizontalen Abstellposition 3-A daher zwischen dem Auslauf 20 einerseits und der Oberseite der unteren Abstellfläche 2, wobei letztere durch das horizontal angeordnete Tropfgitter 2a zum Aufstellen größerer Behältnisse zur Kaffeeaufnahme aus dem Auslauf 20 geeignet ist, wenn die obere Abstellfläche 3 in ihre Verstauposition 3-V innerhalb des Gehäuses 1 bzw. innerhalb des vom Benutzer weg in das Gehäuse 1 eingeschobenen (und somit einen Teil des Gehäuses 1 ausbildenden) Satzbehälters 4 verschwenkt worden ist (vgl. Figur 2).

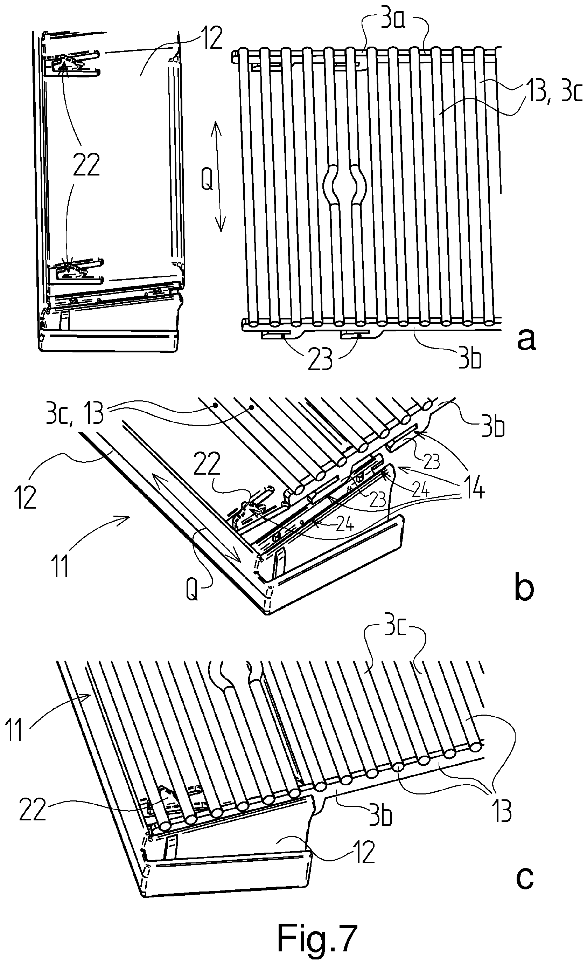

Wie nachfolgend noch näher beschrieben, weist der Satzbehälter 4 auf seiner zum Benutzer hin gerichteten Vorderfront eine zum Benutzer hin horizontal (also senkrecht zum lotrechten Wandabschnitt des Satzbehälters 4 bzw. zur Gehäusefront 1 gesehen) überkragende Stützfläche 5 auf, auf der das Tropfgitter 13 der oberen Abstellfläche 3 in deren horizontaler Abstellposition 3-A horizontal aufliegt. Der Griff 12 zum Herausziehen der oberen Abstellfläche 3 aus dem Satzbehälter 4 ist in dieser Position 3-A in Richtung zum Benutzer hin gesehen beabstandet von besagter Stützfläche 5 positioniert. Das Tropfgitter 13 liegt dabei horizontal auf der horizontal ausgerichteten Auflagefläche 7 der Stützfläche 5 auf. Die Stützfläche 5 ist hier als Handgriff zur Entnahme des Satzbehälters 4 ausgebildet. Die obere Abstellfläche 3 umfasst das Tropfgitter 13 und den damit über eine Schnappverbindung 14 (vgl. Figur 7) verbundenen Griff 12. In der Position 3-A ist der Griff 12 auf der dem Gehäuse 1 bzw. dem Satzbehälter 4 abliegenden (also dem Benutzer zugewandten) Seite, also am dem Gehäuse 1 abgewandten Ende 11 der oberen Abstellfläche 3 sowie (in Vertikalrichtung V gesehen) unterhalb des Tropfgitters 13 positioniert. Das in der Position 3-A (im eingeschobenen Zustand des Satzbehälters 4) der vorderen Front des Satzbehälters 4 zugewandte Ende der oberen Abstellfläche 3 bzw. deren Tropfgitters 13 ist mit dem Bezugszeichen 10 versehen. In der Position 3-V ist im in das Gehäuse 1 bzw. in die restlichen Gehäuseabschnitte eingeschobenen Zustand des Kaffeesatzbehälters 4 von der oberen Abstellfläche 3 lediglich der Griff 12 der oberen Abstellfläche 3 sichtbar (Figur 2).

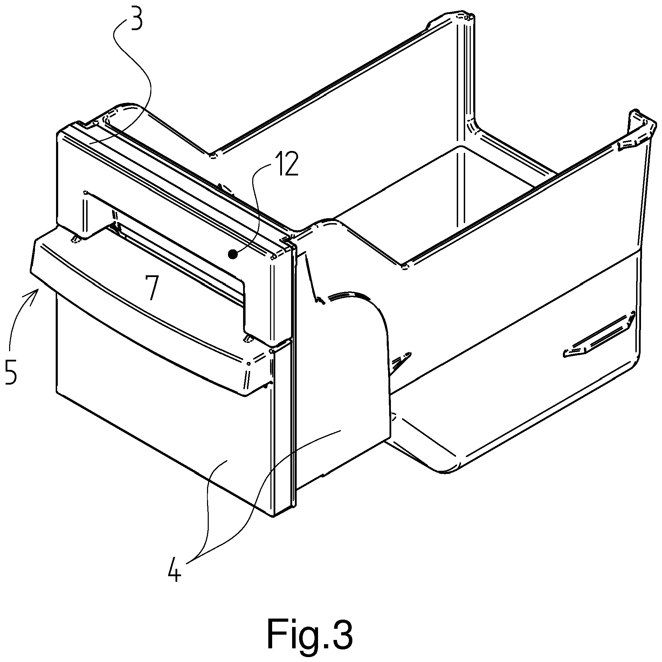

Figur 3 zeigt eine dreidimensionale Schrägaufsicht auf den Kaffeesatzbehälter 4 in einem Zustand, in dem Letzterer vollständig aus dem Gehäuse 1 bzw. den übrigen Gehäuseabschnitten der Kaffeemaschine entnommen ist. (Anders ausgedrückt: in Figur 3 ist vom Gehäuse der Kaffeemaschine bzw. von der Kaffeemaschine lediglich der Satzbehälter 4 samt dessen zum Benutzer hin gerichteter Vorderfront sichtbar. Diese Vorderfront bildet im eingeschobenen Zustand des Satzbehälters 4 einen Teil der Vorderfront des Gehäuses 1 aus. In Vertikalrichtung V gesehen etwa auf mittlerer Höhe der Vorderfront des Satzbehälters 4 kragt als Teil dieser Vorderfront zum Benutzer hin die Stützfläche 5 über. Die Überkragung ist dabei so ausgeformt, dass die Stützfläche 5 des Satzbehälters 4 eine horizontal liegende Auflagefläche 7 ausbildet, auf der das Tropfgitter 13 der oberen Abstellfläche 3 in deren Position 3-A (vgl. Figur 1 - Figur 3 zeigt dagegen die Position 3-V) horizontal aufliegt, wobei die Auflagefläche 7 das Tropfgitter 13 mechanisch unterstützt (vgl. Figur 1). Wie Figur 3 erneut verdeutlicht, ist in der Position 3-V von der oberen Abstellfläche 3 lediglich der Griff 12 zu sehen, wenn der Satzbehälter 4 vollständig ins Gehäuse 1 eingeschoben ist (vgl. Figur 2).

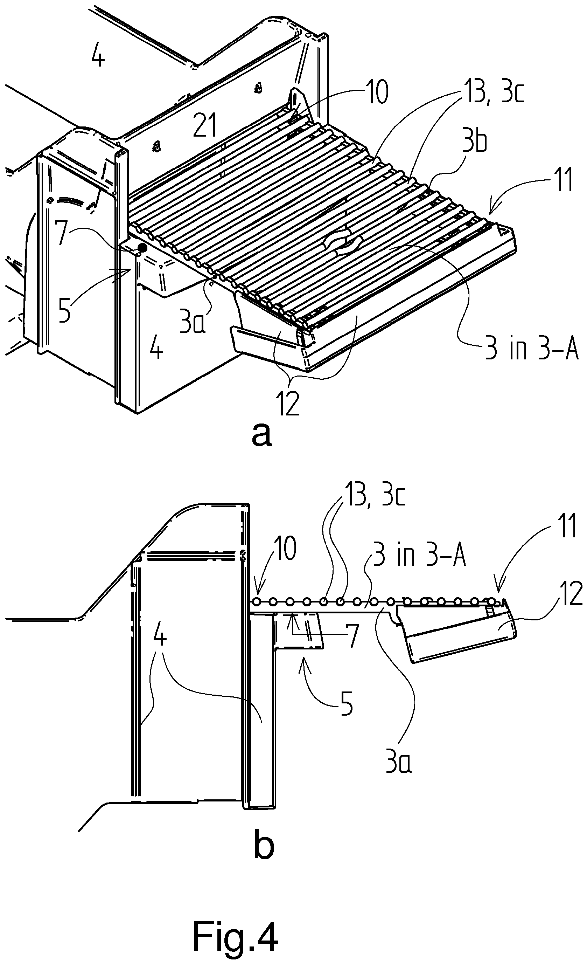

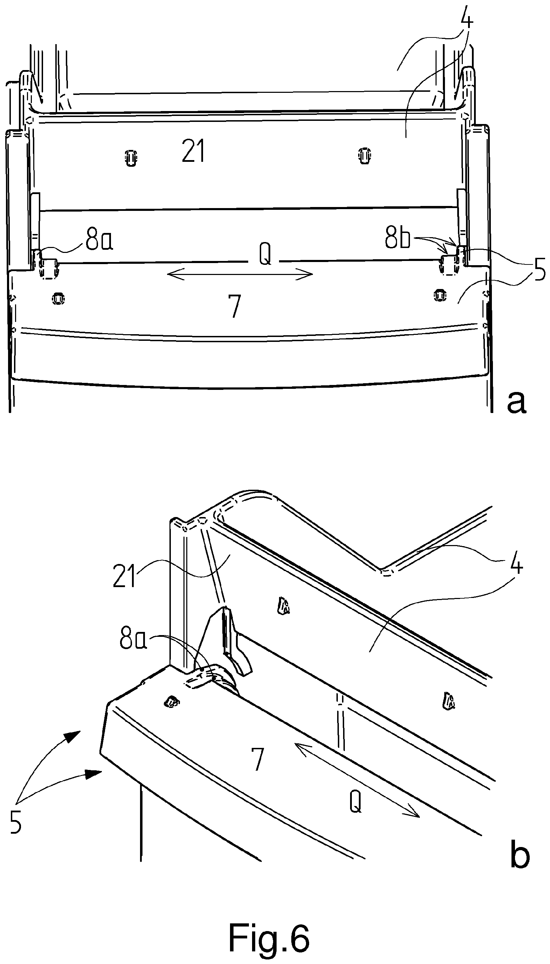

Figur 4 zeigt wie Figur 3 lediglich den Satzbehälter 4 samt oberer Abstellfläche 3, dieses Mal jedoch in der Abstellposition 3-A der oberen Abstellfläche 3 relativ zum Satzbehälter 4 bzw. zum Gehäuse 1 (letzteres nicht sichtbar): Figur 4a zeigt eine dreidimensionale Aufsicht auf die Elemente 3, 4, Figur 4b zeigt eine Seitenansicht auf diese Elemente bzw. einen Schnitt durch diese Elemente 3, 4, wobei die Vertikale V (vgl. Figur 5a) in der Schnittebene verläuft, die Schnittebene senkrecht zur Horizontalebene HZ (vgl. Figur 5c) und in Richtung vom Gehäuseinneren der Kaffeemaschine zum Benutzer hin verläuft. Gut sichtbar sind die beiden in der Position 3-A in der Horizontalebene HZ angeordneten, in Richtung vom Gehäuseinneren zum Benutzer hin (und quer dazu gesehen voneinander beabstandet) verlaufenden Stützbalken 3a, 3b des Tropfgitters 13. Auf diesen Stützbalken 3a, 3b liegen die Enden der quer zu diesen Stützbalken verlaufenden einzelnen Tropfgitterstäbe 3c des Tropfgitters 13 auf, die die Oberseite der oberen Abstellfläche 3 ausbilden und die beim Aufstellen des Gefäßes geringerer Höhe mit letzterem berührend in Kontakt stehen. Ebenfalls sichtbar (vgl. auch Figuren 5 und 6) ist die am oberen Ende des Satzbehälters 4 quer zu den Stützbalken 3a, 3b, also parallel zu den Tropfgitterstäben 3c verlaufende Anschlagfläche 21, die in der Position 3-V der oberen Abstellfläche 3 für deren Ende 11 bzw. für deren Griff 12 (zusammen mit dem Verschwenkabschnitt 8 bzw. dessen Stützleisten 8a, 8b) einen mechanischen Anschlag zum stabilen Lagern der oberen Abstellfläche 3 in der zurückgezogenen Position 3-V im Satzbehälter 4 ausbildet. Wie Figur 4 ebenfalls zeigt, bildet die Auflagefläche 7 der Stützfläche 5 in der Position 3-A eine horizontal verlaufende mechanische Anschlagsfläche für die Unterseiten der Stützbalken 3a, 3b. Somit wird/werden in der Position 3-A die obere Abstellfläche 3 und insbesondere deren auf der der Fläche 7 abgewandten Seite angeordneten Tropfgitterstäbe 3c vermittels der Auflagefläche 7 einerseits und der Einrastung des Endes 10 in die Raste 9 andererseits (vgl. Figur 5a) mechanisch stabil in der Position 3-A gehalten. Dadurch ist ein Aufstellen auch eines befüllten Gefäßes geringerer Höhe auf die obere Abstellfläche 3 ermöglicht.

Figur 5a zeigt die obere Abstellfläche 3 horizontal H bzw. in der Horizontalebene HZ (vgl. Figur 5c) vermittels der mechanischen Anschläge 5 bzw. 7 einerseits und 9 andererseits (vgl. nachfolgend) stabil ausgerichtet in ihrer Position 3-A. Figur 5b zeigt die obere Abstellfläche 3 zwischen der Position 3-A aus Figur 5a einerseits und der in Figur 5c gezeigten, stabilen Position 3-V (stabilisiert vermittels der beiden mechanischen Anschläge 8 und 21, vgl. nachfolgend), also der Verstauposition 3-V im Satzbehälter 4 bzw. in einer räumlichen Tasche an der dem Benutzer zugewandten Vorderfront desselben. Anders ausgedrückt zeigt Figur 5b eine Position der oberen Abstellfläche 3, in der diese entlang der gekrümmt verlaufenden, gestrichelt eingezeichneten Schwenktrajektorie 6 bereits ein Stück weit ins Innere des Satzbehälters 4 eingeschoben worden ist, so dass die obere Abstellfläche 3 bereits nicht mehr in der Horizontalen HZ liegt, sondern ein Stück weit hin zur Vertikalrichtung V verschwenkt worden ist.

Wie Figur 5a zeigt, weist die dem Benutzer bzw. der Stützfläche 5 abgewandt liegende, also die in Bezug auf das Gehäuse 1 im eingeschobenen Zustand des Behälters 4 innenliegende Seitenwand 25 der zum Einschieben der oberen Abstellfläche 3 ins Innere des Behälters 4 ausgebildeten Raumtasche des Satzbehälters 4 am oberen Ende des Behälters 4 eine (obere) Anschlagfläche 21 und darunter, auf Höhe HZ bzw. auf Höhe der Auflagefläche 7, eine Raste 9 auf. Die Raste 9 ist also am unteren Ende der Fläche 21 ausgebildet.

In der Position 3-A wird ein zwischen den beiden Enden 10, 11 liegender Abschnitt der beiden Stützbalken 3a, 3b mechanisch von der Auflagefläche 7 so unterstützt, dass die obere Abstellfläche 3 in Vertikalrichtung V nicht nach unten fallen kann. Andererseits greift der vom Benutzer in der Position 3-A am weitesten abgewandte, letzte Tropfgitterstab 3c in dieser Position formschlüssig in die Raste 9 ein. Im Bereich der Raste 9 ist die Seitenwand 25 der Raumtasche so ausgeformt und die Raste 9 ist (in Vertikalrichtung V gesehen) auf Höhe der Fläche 7 so positioniert und ausgeformt, dass ein Abkippen der oberen Abstellfläche 3 zum Benutzer und nach unten hin verhindert wird. Anders ausgedrückt wird in der Position 3-A die obere Abstellfläche 3 durch die beiden mechanischen Anschläge 9 und 7, also durch den formschlüssigen Eingriff des letzten Tropfgitterstabes 3c in die Raste 9 einerseits und durch die abschnittsweise mechanische Unterstützung der beiden Stützbalken 3a, 3b durch die Fläche 7 andererseits, stabil gehalten. Auch ein Aufstellen voll befüllter (niederer) Gefäße auf die obere Abstellfläche 3 ist somit in dieser Position ermöglicht.

Mittig zwischen den beiden Enden 10, 11 gelegen sei ein (gedachter) Verschiebungspunkt 6' der beiden Stützbalken 3a, 3b (hier am Balken 3b gezeigt) definiert. Figur 5b zeigt eine Position der Abstellfläche 3 zwischen ihren beiden Extrempositionen 3-A (Figur 5a) einerseits und 3-V (Figur 5c) andererseits. Mit anderen Worten ist in Figur 5b die obere Abstellfläche 3 durch manuelles Zurückdrücken des Griffs 12 durch einen Benutzer zum Inneren des Gehäuses 1, also in Richtung in die Raumtasche des Satzbehälters 4 hin bereits ein Stück in besagte Raumtasche hinein verkippt, hat also die horizontale Lage aus Figur 5a bereits verlassen.

Am Benutzer abgewandten Ende (also am in Bezug auf das Gehäuse 1 bzw. den Satzbehälter 4 gesehen inneren Ende der Auflagefläche 7) weist die Stützfläche 5 einen kreisabschnittsförmig nach unten gekrümmten, sich unmittelbar an die horizontal verlaufende Auflagefläche 7 anschließenden Verschwenkabschnitt 8 auf. In Querrichtung Q, vgl. Fig. 6, gesehen (also entlang der Tropfgitterstäbe 3c gesehen) besteht dieser 8 aus zwei beabstandet voneinander angeordneten Stützleisten 8a, 8b. Letztere verlaufen in Richtung zum Gehäuseinneren (also vom Benutzer weg) gesehen mit zunehmender Krümmung nach unten (vgl. Figur 6). Quer zur Längsrichtung der Gitterstäbe 3c gesehen an beiden Enden der Fläche 7 geht letztere stetig differenzierbar in die beiden kreisabschnittsförmig gebogenen Stützleisten 8a, 8b so über, dass bereits nach geringfügigem Anheben des Griffs 12 (und damit der oberen Abstellfläche 3) aus der Position 3-A nach oben und vom Benutzer weg die obere Abstellfläche 3 an ihrem innenseitigen Ende 10 Übergewicht bekommt, also schwerkraftbedingt ins Innere der Raumtasche des Satzbehälters 4 hinein in ihre Endposition (Verstauposition 3-V in Figur 5c) rutscht.

Dabei bewegt sich der Verschiebungspunkt 6' entlang der gekrümmt verlaufenden Schwenktrajektorie 6 von einer Position außerhalb des Satzbehälters 4 und oberhalb der Fläche 7 (in der Position 3-A der Fläche 3) bis in eine Position am innenliegenden Ende der Schwenktrajektorie 6 innerhalb der Raumtasche, also bis in eine Position jenseits des innenseitigen Endes des Verschwenkabschnitts 8 bzw. dessen Stützleisten 8a, 8b (Verstauposition 3-V der Fläche 3, vgl. Figur 5c).

Die beiden Stützbalken 3a, 3b gleiten beim Verschwenken in die Position 3-V mechanisch entlang der Auflagefläche 7 und anschließend entlang der Stützleisten 8a, 8b des Verschwenkabschnitts 8. Die Schwenktrajektorie (bzw. die Bewegungstrajektorie des Punktes 6') ist durch dieses Entlanggleiten des Punktes 6' definiert. Dabei gleitet der innerste Gitterstab 3c entlang der Seitenwand 25 aus der Raste 9 nach innen und nach unten innerhalb der Raumtasche.

In der Verstauposition 3-V ist die obere Abstellfläche 3 (bis auf den Griff 12, der dann mit seiner frontseitigen Fläche vertikal V steht, also einen bündigen Abschluss der Frontfläche der Maschine 1 bildet) vollständig in der frontseitigen Raumtasche des Satzbehälters 4 verstaut. In der Position 3-V steht die obere Abstellfläche 3 nahezu senkrecht (Winkel a): Der Winkel a (vgl. Figur 5c) zwischen der Horizontalen HZ einerseits und der oberen Abstellfläche 3, also deren Stützbalken 3a, 3b, andererseits beträgt hier 80°. Ein mechanischer Anschlag des Griffes 12 an seinem vorderseitigen Ende 11 am oberen Ende der oberen Anschlagfläche 21, ein mechanischer Anschlag der dem Ende 10 zugewandten Seite des Griffes 12 am innenliegenden Ende der Fläche 7 und/oder am Verschwenkabschnitt 8 sowie ein mechanischer Anschlag des außenliegenden Endes 11 des Tropfgitters 13 (bzw. von dessen Gitterstäben 3c) an der oberen Anschlagfläche 21 verhindern ein weiteres schwerkraftbedingtes Abrutschen der oberen Abstellfläche 3 aus der Verstauposition 3-V in die Raumtasche des Satzbehälters 4 hinein, also ein weiteres Abkippen der oberen Abstellfläche 3 über den in Figur 5c gezeigten Winkel α hinaus.

Figuren 6a und 6b zeigen die Ausformung des Kaffeesatzbehälters 4 des Gehäuses 1, insbesondere dessen oberer Anschlagfläche 21 und dessen Stützfläche 5 (samt deren Auflagefläche 7 und deren Verschwenkabschnitt 8 bzw. 8a, 8b) nach dem vollständigen Entfernen der oberen Abstellfläche 3 aus der Raumtasche. Gut sichtbar sind die beiden sich am innenliegenden Ende der Stützfläche 5 deren Auflagefläche 7 stetig differenzierbar anschließenden beiden Stützleisten 8a, 8b, die sich in Querrichtung Q (also senkrecht zur in den Figuren 4b, 5b und 5c gezeigten Schnittfläche) gesehen an den beiden Enden der Auflagefläche 7 zum Inneren des Satzbehälters 4 verlaufend anschließen bzw. an den Innenseiten der Seitenwände des Kaffeesatzbehälters 4 ausgebildet sind.

Das Gleiten der oberen Abstellfläche 3 (bzw. des Punktes 6') entlang der Schwenktrajektorie 6 über die Elemente 7, 8a und 8b geschieht geräuscharm, da keine zusätzlichen Teile ein- und ausgeklappt werden müssen, die gegen Anschläge schlagen würden, und da die Seitenwangen bzw. die Stützbalken 3a, 3b, an denen die Querstangen 3c des Tropfgitters 13 befestigt sind, in Querrichtung Q gesehen links und rechts (vgl. Figur 6) über die Stützleisten 8a, 8b des Verschwenkabschnitts 8 der Stützfläche 5 des Satzbehälters 4 gleiten. Wäre dies nicht der Fall (würden also z.B. die Stützbalken 3a, 3b fehlen), würden die Querstangen 3c über die Elemente 5, 8 geräuschvoll nach unten in die Position 3-V rattern.

Wie Figur 7 zeigt, sind das Tropfgitter 13 und der Griff 12 über eine Schnappverbindung 14 miteinander verbindbar und wieder lösbar, also miteinander verclipsbar und wieder lösbar. Figur 7a zeigt links eine Aufsicht von oben auf den Griff 12: Entlang der Querrichtung Q (vgl. auch Figur 6) bzw. längs der Tropfgitterstäbe 3c des Tropfgitters 13 gesehen weist die Oberseite des Griffes 12 an beiden Enden jeweils einen nach oben ragenden Vorsprung 22 auf. Dieser ist zum formschlüssigen Eingriff zwischen zwei, genauer gesagt den beiden letzten am Ende 11 des Tropfgitters liegenden, Tropfgitterstäbe(n) 3c ausgebildet. In Querrichtung Q gesehen außenseitig von den Vorsprüngen 22 sind an der Oberseite des Griffes 12 im Bereich jeder Stirnfläche des Griffes 12 zwei Eingriffslöcher 24 (vgl. Figur 7b) ausgebildet. Letztere korrespondieren mit an den Unterseiten der beiden Stützbalken 3a, 3b angeordneten Eingriffshaken 23.

Mit anderen Worten kann das Tropfgitter 13 senkrecht zur Querrichtung Q auf den Griff 12 aufgeschoben werden, indem die zwei längs der Stützbalken 3a, 3b gesehen beabstandet voneinander am jeweiligen Stützbalken 3a, 3b ausgebildeten Eingriffshaken 23 formschlüssig in die dazu korrespondierenden Eingriffslöcher 24 eingehakt werden. Am Ende des Aufschiebevorgangs verhaken sich die beiden Vorsprünge 22 zwischen den beiden letzten Tropfgitterstäben 3c an dem dem Griff 12 zugewandten Ende 11 des Tropfgitters 13 bzw. der oberen Abstellfläche 3. Der formschlüssige Eingriff der insgesamt vier Eingriffshaken 23 in die insgesamt vier Eingriffslöcher 24 einerseits und das Einclipsen der beiden Vorsprünge 22 zwischen die besagten unmittelbar benachbarten Tropfgitterstäbe 3c sorgt für ein stabiles mechanische Einschnappen des Tropfgitters 13 am Griff 12 bzw. umgekehrt (vgl. Figur 7c). Die Schnappverbindung 14 der beiden Teile 12, 13, die die beiden außenliegenden Tropfgitterstäbe 3c, die beiden Vorsprünge 22 und die Eingriffshaken 23 sowie die Eingriffslöcher 24 umfasst, kann durch einen Benutzer, z.B. zum Reinigen der beiden Teile 12 und 13, mittels ausreichenden Kraftaufwandes gelöst werden.

Somit werden die Eingriffshaken 23 am Tropfgitter 13 in die schlitzförmigen Eingriffslöcher 24 am Handgriff 12 eingesetzt, um die Schnappverbindung 14 zu schließen. Durch Schieben in den Handgriff 12 entsteht ein Hintergriff und die beiden Vorsprünge bzw. Schnapphaken 22 rasten zwischen den beiden vorderen Querstangen bzw. Tropfgitterstäben 3c ein.

## Patentansprüche

1. Getränkebereiter, insbesondere elektrisch betriebene Kaffeemaschine, zum Zubereiten eines Getränkes mit
einem Gehäuse (1) und
einer ersten Abstellfläche (2), die nachfolgend als untere Abstellfläche bezeichnet ist, zum Abstellen eines ersten, getränkeaufnehmenden externen Behältnisses,
eine zweite Abstellfläche (3), die nachfolgend als obere Abstellfläche bezeichnet ist, zum Abstellen eines zweiten, getränkeaufnehmenden externen Behältnisses, das eine geringere Höhe aufweist, als die Höhe des ersten Behältnisses,
wobei die obere Abstellfläche (3) von einer ersten, nachfolgend als Verstauposition bezeichneten Position (3-V) im Gehäuse (1) in eine zweite, horizontale, nachfolgend als Abstellposition bezeichnete Position (3-A) verschwenkbar ist und umgekehrt,
wobei
der Getränkebereiter eine Stützfläche (5) aufweist, über die die obere Abstellfläche (3) entlang einer Schwenktrajektorie (6) bewegbar ist, zum Verschwenken aus der Verstauposition (3-V) in die Abstellposition (3-A) oder umgekehrt,
**dadurch gekennzeichnet, dass** in der Verstauposition (3-V) der überwiegende Teil der oberen Abstellfläche (3) innerhalb des Gehäuses (1) des Getränkebereiters positioniert ist.

2. Getränkebereiter nach dem vorhergehenden Anspruch, **dadurch gekennzeichnet, dass**
die obere Abstellfläche (3) in der Verstauposition (3-V) im wesentlichen senkrecht steht, was dadurch definiert ist, dass der Winkel (α) zwischen der Horizontalen (HZ) und der oberen Abstellfläche (3) zwischen 60° und 90°, bevorzugt zwischen 80° und 90°, beträgt
und/oder
dass die obere Abstellfläche (3) in der Abstellposition (3-A) in der Horizontalen (HZ) gesehen über das Gehäuse (1) oder einen Abschnitt desselben überkragt.

3. Getränkebereiter nach einem der vorhergehenden Ansprüche, **gekennzeichnet durch**
eine elektrisch betriebene Kaffeemaschine als Getränkebereiter,
**dadurch, dass** das Gehäuse (1) einen Kaffeesatzbehälter (4) umfasst und
**dadurch, dass** die obere Abstellfläche (3) in ihrer Verstauposition (3-V) im Kaffeesatzbehälter (4) des Gehäuses (1) versenkt ist.

4. Getränkebereiter nach einem der vorhergehenden Ansprüche, **gekennzeichnet durch**
die obere Abstellfläche (3) entlang der Schwenktrajektorie (6) über die Stützfläche (5) ziehbar und/oder schiebbar ist.

5. Getränkebereiter nach dem vorhergehenden Anspruch, **dadurch gekennzeichnet, dass**
die Stützfläche (5) eine Auflagefläche (7) aufweist, auf der die obere Abstellfläche (3) in der Abstellposition (3-A) horizontal ausgerichtet aufliegt,
und/oder
dass die Stützfläche (5) einen Verschwenkabschnitt (8) aufweist, der bevorzugt - in Richtung quer zur Schwenktrajektorie (6) gesehen - zwei voneinander beabstandete Stützleisten (8a, 8b) umfasst, über den/die (8, 8a, 8b) die obere Abstellfläche (3) entlang eines nicht geradlinig verlaufenden Abschnittes der Schwenktrajektorie (6) bewegbar ist, bevorzugt aus der Verstauposition (3-V) in die Abstellposition (3-A) bewegbar ist oder umgekehrt.

6. Getränkebereiter nach einem der vorhergehenden Ansprüche, **dadurch gekennzeichnet, dass**
das Gehäuse(1), bei Rückbezug auf Anspruch 3 bevorzugt der Kaffeesatzbehälter (4) des Gehäuses (1), eine Raste (9) aufweist, in die in der Abstellposition (3-A) die obere Abstellfläche (3), bevorzugt das - in der Abstellposition (3-A) gesehen - dem Gehäuse (1) zugewandte Ende (10) der oberen Abstellfläche (3), einrastet.

7. Getränkebereiter nach dem vorhergehenden Anspruch bei Rückbezug auf Anspruch 4, **dadurch gekennzeichnet, dass**
das Gehäuse (1), bei Rückbezug auf Anspruch 3 bevorzugt der Kaffeesatzbehälter (4) des Gehäuses (1), und die obere Abstellfläche (3) so ausgebildet sind, dass im in die Raste (9) eingerasteten Zustand die obere Abstellfläche (3) durch sowohl die Stützfläche (5), bevorzugt durch deren Auflagefläche (7), als auch die Raste (9) in einem stabilen Zustand gehalten ist, das heißt in einem Zustand gehalten ist, in dem sich die obere Abstellfläche (3) auch beim Aufstellen eines vollständig mit einem Getränk befüllten zweiten Behältnisses auf der oberen Abstellfläche (3) nicht aus der Abstellposition (3-A) weg bewegt,
wobei bevorzugt in diesem stabilen Zustand die obere Abstellfläche (3) durch die Stützfläche (5), bevorzugt durch deren Auflagefläche (7), an einem Wegbewegen in Vertikalrichtung (V) und durch die Raste (9) an einem Wegbewegen in Horizontalrichtung (H) und/oder in Vertikalrichtung (V) gehindert ist.

8. Getränkebereiter nach einem der vorhergehenden Ansprüche, **dadurch gekennzeichnet, dass**
die obere Abstellfläche (3) an ihrem - in der Abstellposition (3-A) gesehen - dem Gehäuse (1) abgewandten Ende (11) einen Griff (12) aufweist, mittels dessen die obere Abstellfläche (3) von einem Benutzer des Getränkebereiters manuell aus der Verstauposition (3-V) in die Abstellposition (3-A) und bevorzugt darüber hinaus auch aus der Abstellposition (3-A) in die Verstauposition (3-V) verschwenkbar ist.

9. Getränkebereiter nach dem vorhergehenden Anspruch, **dadurch gekennzeichnet, dass**
die obere Abstellfläche (3) den Griff (12) und ein Tropfgitter (13), dasin der Abstellposition (3-A) gesehen - eine zum darauf Abstellen des zweiten, getränkeaufnehmenden externen Behältnisses geeignete Fläche ausbildet, aufweist oder aus diesen beiden Bauelementen (12, 13) besteht,
wobei bevorzugt diese beiden Bauelemente (12, 13) über eine Schnappverbindung (14) miteinander verbindbar und wieder lösbar sind.

10. Getränkebereiter nach einem der beiden vorhergehenden Ansprüche, **dadurch gekennzeichnet, dass**
in ihrer Verstauposition (3-V) von der oberen Abstellfläche (3) von außerhalb des Gehäuses (1) alleine der Griff (12) sichtbar und/oder für den Benutzer zugänglich ist.

11. Getränkebereiter nach einem der vorhergehenden Ansprüche, bevorzugt nach Anspruch 3, **dadurch gekennzeichnet, dass**
die obere Abstellfläche (3) und diejenigen Abschnitte des Gehäuses (1), insbesondere dessen Kaffeesatzbehälters (4), innerhalb derer die obere Abstellfläche (3) in ihrer Verstauposition (3-V) zumindest abschnittsweise verstaut/versenkt ist, so ausgebildet sind, dass die obere Abstellfläche (3) aus ihrer Verstauposition (3-V) nicht nur in ihre Abstellposition (3-A) verschwenkbar ist, sondern aus ihrer Verstauposition (3-V) auch manuell durch einen/den Benutzer des Getränkebereiters vollständig aus dem Getränkebereiter, insbesondere aus dessen Gehäuse (1), insbesondere aus dessen (1) Kaffeesatzbehälter (4), entnehmbar ist.

## Claims

1. Beverage preparer, in particular electrically operated coffee machine, for preparing a beverage having
a housing (1) and
a first deposit surface (2), which is termed subsequently lower deposit surface, for depositing a first, beverage-receiving external container,
a second deposit surface (3), which is termed subsequently upper deposit surface, for depositing a second, beverage-receiving external container which has a lesser height than the height of the first container,
the upper deposit surface (3) being pivotable from a first position (3-V), termed subsequently stowage position, in the housing (1) into a second, horizontal position (3-A), termed subsequently deposit position and vice versa,
the beverage preparer having a support surface (5) above which the upper deposit surface (3) is moveable along a pivot trajectory (6) for pivoting out of the stowage position (3-V) into the deposit position (3-A) or vice versa,
**characterised in that**, in the stowage position (3-V), the predominant part of the upper deposit surface (3) is positioned within the housing (1) of the beverage preparer.

2. Beverage preparer according to the preceding claim, **characterised in that**
the upper deposit surface (3) is essentially perpendicular in the stowage position (3-V), which is defined by the angle (α) between the horizontal (HZ) and the upper deposit surface (3) being between 60° and 90°, preferably between 80° and 90°,
and/or
**in that** the upper deposit surface (3), viewed in the deposit position (3-A) in the horizontal (HZ), protrudes beyond the housing (1) or a portion of the same.

3. Beverage preparer according to one of the preceding claims, **characterised by**
an electrically operated coffee machine as beverage preparer,
in that the housing (1) comprises a coffee grounds container (4) and
in that the upper deposit surface (3) is lowered in its stowage position (3-V) in the coffee grounds container (4) of the housing (1).

4. Beverage preparer according to one of the preceding claims, **characterised by**
the upper deposit surface (3) being pullable and/or pushable along the pivot trajectory (6) beyond the support surface (5).

5. Beverage preparer according to the preceding claim, **characterised in that**
the support surface (5) has a bearing surface (7) on which the upper deposit surface (3) is placed orientated horizontally in the deposit position (3-A),
and/or
**in that** the support surface (5) has a pivot portion (8) which preferably - viewed in the direction transversely to the pivot trajectory (6) - comprises two support strips (8a, 8b) which are at a spacing from each other and via which (8, 8a, 8b) the upper deposit surface (3) is moveable along a portion of the pivot trajectory (6) extending non-linearly, preferably is moveable from the stowage position (3-V) into the deposit position (3-A) or vice versa.

6. Beverage preparer according to one of the preceding claims **characterised in that**
the housing (1), with reference to claim 3, preferably the coffee grounds container (4) of the housing (1), has a notch (9) in which, in the deposit position (3-A), the upper deposit surface (3), preferably - viewed in the deposit position (3-A) - the end (10) of the upper deposit surface (3), orientated towards the housing (1), engages.

7. Beverage preparer according to the preceding claim with reference to claim 4, **characterised in that**
the housing (1), with reference to claim 3, preferably the coffee grounds container (4) of the housing (1), and the upper deposit surface (3) are configured such that, in the state engaged in the notch (9), the upper deposit surface (3) is retained both by the support surface (5), preferably by the bearing surface (7) thereof, and the notch (9) in a stable state, i.e. is retained in a state in which the upper deposit surface (3), even when standing a second container filled completely with a beverage on the upper deposit surface (3) does not move out of the deposit position (3-A),
preferably in this stable state, the upper deposit surface (3) being prevented by the support surface (5), preferably by the bearing surface (7) thereof, from moving away in the vertical direction (V) and by the notch (9) from moving away in the horizontal direction (H) and/or in the vertical direction (V).

8. Beverage preparer according to one of the preceding claims, **characterised in that**
the upper deposit surface (3) in its - viewed in the deposit position (3-A) - end (11) orientated away from the housing (1) has a handle (12) by means of which the upper deposit surface (3) is pivotable by a user of the beverage preparer manually from the stowage position (3-V) into the deposit position (3-A) and preferably in addition also from the deposit position (3-A) into the stowage position (3-V).

9. Beverage preparer according to the preceding claim, **characterised in that**
the upper deposit surface (3) has the handle (12) and a drop grating (13) which - viewed in the deposit position (3-A) - configures a surface which is suitable for depositing thereon the second, beverage-receiving external container or consists of these two constructional elements (12, 13),
preferably these two constructional elements (12, 13) being connectable to each other and being releasable again via a snap-on connection (14).

10. Beverage preparer according to one of the two preceding claims, **characterised in that**
in its stowage position (3-V), the handle (12) is visible from the upper deposit surface (3) and/or is accessible for the user only from outside the housing (1).

11. Beverage preparer according to one of the preceding claims, preferably according to claim 3, **characterised in that**
the upper deposit surface (3) and those portions of the housing (1), in particular the coffee grounds container (4) thereof, within which the upper deposit surface (3), in its stowage position (3-V), is stowed/lowered at least in portions, are configured such that the upper deposit surface (3) is pivotable from its stowage position (3-V) not only into its deposit position (3-A) but is removable from its stowage position (3-V) also manually by a/the user of the beverage preparer completely out of the beverage preparer, in particular out of the housing (1) thereof, in particular out of the coffee grounds container (4) thereof (1).

## Revendications

1. Appareil préparateur de boissons, plus particulièrement machine à café électrique pour la préparation d'une boisson, avec
un boîtier (1) et
une première surface de stockage (2), appelée surface de stockage inférieure dans la suite, pour le stockage d'un premier récipient externe contenant une boisson,
une deuxième surface de stockage (3), appelée surface de stockage supérieure dans la suite, pour le stockage d'un deuxième récipient externe contenant une boisson, qui présente une hauteur inférieure à la hauteur du premier récipient,
la surface de stockage supérieure (3) pouvant être pivotée d'une première position (3-V), appelée position de rangement dans la suite, dans le boîtier (1), vers une deuxième position (3-A) horizontale, appelée position de stockage dans la suite, et inversement,
moyennant quoi
l'appareil préparateur de boissons comprend une surface d'appui (5) au-dessus de laquelle la surface de stockage supérieure (3) peut être déplacée le long d'une trajectoire de pivotement (6), pour le pivotement de la position de rangement (3-V) vers la position de stockage (3-A) ou inversement,
**caractérisé en ce que**, dans la position de rangement (3-V), la majeure partie de la surface de stockage supérieure (3) est positionnée à l'intérieur du boîtier (1) de l'appareil préparateur de boissons.

2. Appareil préparateur de boissons selon la revendication précédente, **caractérisé en ce que**
la surface de stockage supérieure (3) est globalement verticale dans la position de rangement (3-V), ce qui est défini par le fait que l'angle (α) entre l'horizontale (HZ) et la surface de stockage supérieure (3) est entre 60° et 90°, de préférence entre 80° et 90°,
et/ou
la surface de stockage supérieure (3), vue dans la position de stockage (3-A) à l'horizontale (HZ), dépasse du boîtier (1) ou d'une portion de celui-ci.

3. Appareil préparateur de boissons selon l'une des revendications précédentes, **caractérisé par**
une machine à café électrique en tant qu'appareil préparateur de boissons,
en ce que le boîtier (1) comprend un récipient de marc de café (4) et
en ce que la surface de stockage supérieure (3) est abaissée, dans sa position de rangement (3-V), dans le récipient de marc de café (4) du boîtier (1).

4. Appareil préparateur de boissons selon l'une des revendications précédentes, **caractérisé par**
la surface de stockage supérieure (3) peut être tirée et/ou poussée le long de la trajectoire de pivotement (6) au-dessus de la surface d'appui (5).

5. Appareil préparateur de boissons selon la revendication précédente, **caractérisé en ce que**
la surface d'appui (5) comprenant une surface de pose (7) sur laquelle la surface de stockage supérieure (3) repose horizontalement dans la position de stockage (3-A),
et/ou
la surface d'appui (5) comprend une portion pivotante (8) qui, vue de préférence transversalement par rapport à la trajectoire de pivotement (6), comprend deux barres d'appui (8a, 8b) distantes l'une de l'autre, par l'intermédiaire desquelles (8, 8a, 8b), la surface de stockage supérieure (3) peut être déplacée le long d'une portion ne s'étendant pas en ligne droite de la trajectoire de pivotement (6), de préférence peut être déplacée de la position de rangement (3-V) vers la position de stockage (3-A) ou inversement.

6. Appareil préparateur de boissons selon l'une des revendications précédentes, **caractérisé en ce que**
le boîtier (1), en référence à la revendication 3 de préférence le récipient de marc de café (4) du boîtier (1), comprend un cran (9) dans lequel s'encliquette, dans la position de stockage (3-A), la surface de stockage supérieure (3), de préférence l'extrémité (10) orientée vers le boîtier (1), vue dans la position de stockage (3-A), de la surface de stockage supérieure (3).

7. Appareil préparateur de boissons selon la revendication précédente, en référence à la revendication 4, **caractérisé en ce que**
le boîtier (1) en référence à la revendication 3 de préférence le récipient de marc de café (4) du boîtier (1), et la surface de stockage supérieure (3) sont conçus de façon à ce que, dans l'état encliqueté dans le cran (9), la surface de stockage supérieure (3) est maintenue aussi bien par la surface d'appui (5), de préférence par sa surface de pose (7), que par le cran (9) dans un état stable dans lequel la surface de stockage supérieure (3) ne s'éloigne pas de la position de stockage (3-A) même lors de la pose d'un deuxième récipient complètement rempli d'une boisson sur la surface de stockage supérieure (3).

8. Appareil préparateur de boissons selon l'une des revendications précédentes, **caractérisé en ce que**
la surface de stockage supérieure (3) comprend, au niveau de son extrémité (11) opposée, vue dans la position de stockage (3-A), au boîtier (1), une poignée (12) au moyen de laquelle la surface de stockage supérieure (3) peut être pivotée manuellement par un utilisateur de l'appareil préparateur de boissons de la position de rangement (3-V) vers la position de stockage (3-A) et de préférence en outre également de la position de stockage (3-A) vers la position de rangement (3-V).

9. Appareil préparateur de boissons selon la revendication précédente, **caractérisé en ce que**
la surface de stockage supérieure (3) comprend la poignée (12) et une grille d'égouttage (13) qui, vue dans la position de stockage (3-A), forme une surface adaptée au stockage du deuxième récipient externe contenant une boisson, ou est constituée de ces deux composants (12, 13),
de préférence ces deux composants (12, 13) pouvant être reliés entre eux et détachés par l'intermédiaire d'une liaison par encliquetage (14).

10. Appareil préparateur de boissons selon l'une des revendications précédentes, **caractérisé en ce que**
dans sa position de rangement (3-V), seule poignée (12) est visible et/ou accessible par l'utilisateur à partir de la surface de stockage supérieure (3) de l'extérieur du boîtier (1).

11. Appareil préparateur de boissons selon l'une des revendications précédentes, de préférence selon la revendication 3, **caractérisé en ce que**
la surface de stockage supérieure (3) et les portions du boîtier (1), plus particulièrement de son récipient de marc de café (4), à l'intérieur desquelles la surface de stockage supérieure (3) est rangée/abaissée au moins partiellement dans sa position de rangement (3-V) sont conçues de façon à ce que la surface de stockage supérieure (3) puisse être pivotée de sa position de rangement (3-V) non seulement vers sa position de stockage (3-A), mais également être retirée manuellement entièrement hors de sa position de rangement (3-V), plus particulièrement hors de son boîtier (1), plus particulièrement hors de son (1) récipient de marc de café (4), par un/l'utilisateur de l'appareil préparateur de boisson.
